Europäisches Patentamt

European Patent Office

Office européen des brevets

(11) Numéro de publication: **0 316 238**
**A1**

## (12) DEMANDE DE BREVET EUROPEEN

(21) Numéro de dépôt: **88402850.7**

(22) Date de dépôt: **14.11.88**

(51) Int. Cl.⁴: **F 16 G 13/06**

(30) Priorité: **12.11.87 FR 8715645**

(43) Date de publication de la demande:
**17.05.89 Bulletin 89/20**

(84) Etats contractants désignés:
**BE DE FR GB IT LU NL**

(71) Demandeur: **SACHS-HURET S.A.**
**60, Avenue Félix Faure**
**F-92000 Nanterre (FR)**

(72) Inventeur: **Robert,Alain**
**9, Chemin de Martel**
**F-38260 La-Côte-Saint-André (FR)**

**Guichard,Daniel**
**Lotissement l'Horme Gillonnay**
**F-38260 La-Côte-Saint-André (FR)**

**Némoz Michel**
**Rue du Lombard**
**F-38870 Saint-Siméon-De-Bressieux (FR)**

(74) Mandataire: **Moncheny, Michel et al**
**c/o Cabinet Lavoix 2 Place d'Estienne d'Orves**
**F-75441 Paris Cedex 09 (FR)**

(54) Chaîne de transmission.

(57) Une chaîne selon l'invention est conçue pour être réalisée à partir d'un nombre très faible d'éléments différents. Chaque élément est formé d'une plaque (30) comportant une partie centrale (31) déportée vers l'extérieur par rapport à deux parties d'extrémité (32), dans lesquelles sont ménagés des orifices (33) pour le passage des axes (3), les deux éléments (30) d'un même maillon étant en appui par leurs parties d'extrémité (32) et délimitant un logement (31a) entre leurs parties centrales, des surfaces d'engrènement étant délimitées aux deux extrémités (34) des plaques et à l'intérieur du logement (31a).

Application, notamment, à la transmission de puissance dans des véhicules, tels que des cycles.

FIG.14

EP 0 316 238 A1

## Description

### Chaîne de transmission

La présente invention concerne les chaînes de transmission pouvant être utilisées, notamment, sur des véhicules ou dans des applications industrielles.

Dans l'état actuel de la technique, ces chaînes sont constituées de maillons intérieurs et extérieurs alternés articulés entre eux par des axes. Les maillons intérieurs sont formés par deux plaques dites plaques intérieures, reliées par deux douilles emmanchées avec serrage dans deux trous prévus à cet effet dans chacune des plaques intérieures. Les maillons extérieurs sont également formés par deux plaques extérieures pourvues chacune de deux trous dans lesquels sont emmanchés avec serrage deux axes qui s'étendent à l'intérieur des douilles des maillons intérieurs.

En variante, les douilles des maillons intérieurs peuvent être remplacées par des ergots tubulaires ou canons venus de matière avec les plaques intérieures (voir document DE-A-2 504 262).

De plus, autour des douilles ou des canons des maillons intérieurs sont en général disposés des rouleaux au niveau desquels s'effectue l'engrènement avec les dents des pignons avec lesquelles la chaîne coopère (voir document GB-A-2 000 846).

De telles chaînes fonctionnent bien entendu de façon satisfaisante, mais présentent l'inconvénient de nécessiter la fabrication d'un nombre de pièces relativement élevé, à savoir des plaques intérieures, comportant ou non des canons, des douilles, des plaques extérieures, des axes, des rouleaux, ce qui accroît les difficultés et les coûts de fabrication.

Le but de cette invention est de réaliser une chaîne de transmission qui soit particulièrement intéressante à cet égard et qui puisse être réalisée à partir d'un nombre très faible d'éléments différents tout en possédant de bonnes qualités de fonctionnement et de résistance et qui soit susceptible d'être utilisée avec des pignons de construction classique.

A cet effet, l'invention a essentiellement pour objet une chaîne de transmission de puissance, comprenant des maillons intérieurs et des maillons extérieurs alternés, articulés entre eux par des axes, les maillons extérieurs étant formés de plaques extérieures fixées aux extrémités desdits axes, qui s'étendent à travers les maillons intérieurs, chaque maillon intérieur étant formé d'au moins un élément qui délimite, d'une part, au moins un logement interne en contact direct avec au moins un axe mais délimitant un jeu avec cet axe, de façon à réaliser l'articulation du maillon intérieur sur ledit axe et, d'autre part, au moins une surface d'engrènement, destinée à coopérer directement avec les dents d'une denture complémentaire, les maillons intérieurs et les maillons extérieurs autorisant le passage des dents entre les plaques qui les constituent, caractérisée en ce que chaque élément est formé d'une plaque comportant une partie centrale déportée vers l'extérieur par rapport à deux parties d'extrémité , dans lesquelles sont ménagés des orifices pour le passage des axes, les deux éléments d'un même maillon étant en appui par leurs parties d'extrémité et délimitant un logement entre leurs parties centrales, des surfaces d'engrènement étant délimitées aux deux extrémités des plaques et à l'intérieur du logement;

L'invention a également pour objet un ensemble de chaîne et de galet, dans lequel ce dernier est conformé de façon à pouvoir coopérer avec une chaîne selon l'invention.

L'invention va être décrite plus en détails ci-dessous en se référant aux dessins annexés sur lesquels :

La Figure 1 est une vue en plan, avec arrachement partiel, d'une chaîne selon l'invention:

La Figure 2 est une vue en élévation latérale avec coupe partielle suivant la ligne 2-2 de la Figure 1:

La Figure 3 est une vue partielle de dessus, d'une variante d'une chaîne des figures 1 et 2;

La Figure 4 est une vue en élévation latérale de cette variante;

La Figure 5 est une vue de dessus, avec arrachement partiel, d'une autre variante de réalisation:

La Figure 6 est une vue en élévation latérale correspondant au mode de réalisation de la Figure 5;

Les Figures 7 et 8 représentent deux galets de guidage destinés à être utilisés avec des chaînes selon l'invention;

La Figure 9 est une vue de dessus avec arrachement partiel d'une autre variante de réalisation;

La Figure 10 est une vue en élévation latérale avec coupe partielle suivant la ligne 10-10 de la figure 9;

La Figure 11 est une vue analogue à celle de la figure 9 avec un maillon intérieur modifié;

Les Figures 12, 14, 16, 18 sont des vues de dessus avec arrachement partiel de quatre autres variantes de réalisation;

Les Figures 13, 15, 17, 19 sont des vues en élévation latérale, le cas échéant avec coupe partielle de ces dernières variantes;

Les Figures 20 et 21 sont deux vues en coupes de deux autres variantes; et la figure 22 représente un galet pouvant être utilisé avec certains des modes de réalisation décrits.

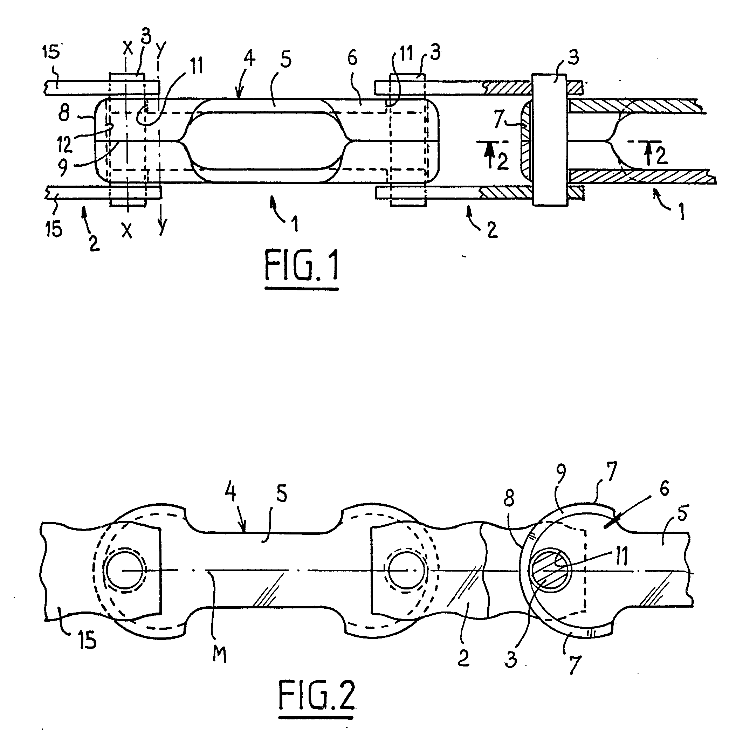

On a représenté aux Figures 1 et 2 une chaîne de transmission formée de maillons intérieurs 1 et extérieurs 2, alternés, articulés entre eux par des axes 3.

Chaque maillon intérieur est constitué de deux plaques intérieures 4, identiques, découpées et embouties. Chaque plaque intérieure comporte une partie centrale 5 sensiblement plane et des parties d'extrémité 6 dont le bord est rabattu pour former un rebord 7. Le rebord 7 délimite une surface externe 8 de forme cylindrique, de section sensiblement circulaire, centrée sur un axe Y-Y parallèle à l'axe X-X de l'axe d'articulation adjacent 3, mais décalé par rapport à cet axe. Les faces en regard 9 des rebords 7 viennent en butée l'une contre l'autre.

Chaque plaque intérieure est par ailleurs percée de deux orifices 11 de section circulaire, de diamètre légèrement supérieur au diamètre des axes 3, chacun de ces orifices étant centré dans le plan médian M du maillon intérieur et sensiblement tangent à la génératrice interne 12 du rebord 7, contenue dans ce même plan M.

Les maillons extérieurs sont formés de plaques extérieures 15 identiques, planes, emmanchées et fixées de façon classique sur les axes 3.

La largeur globale de chaque maillon intérieur est légèrement inférieure à l'intervalle séparant deux plaques d'un même maillon extérieur, de façon à emprisonner sans jeu excessif les maillons inter-ieurs entre les plaques des maillons extérieurs.

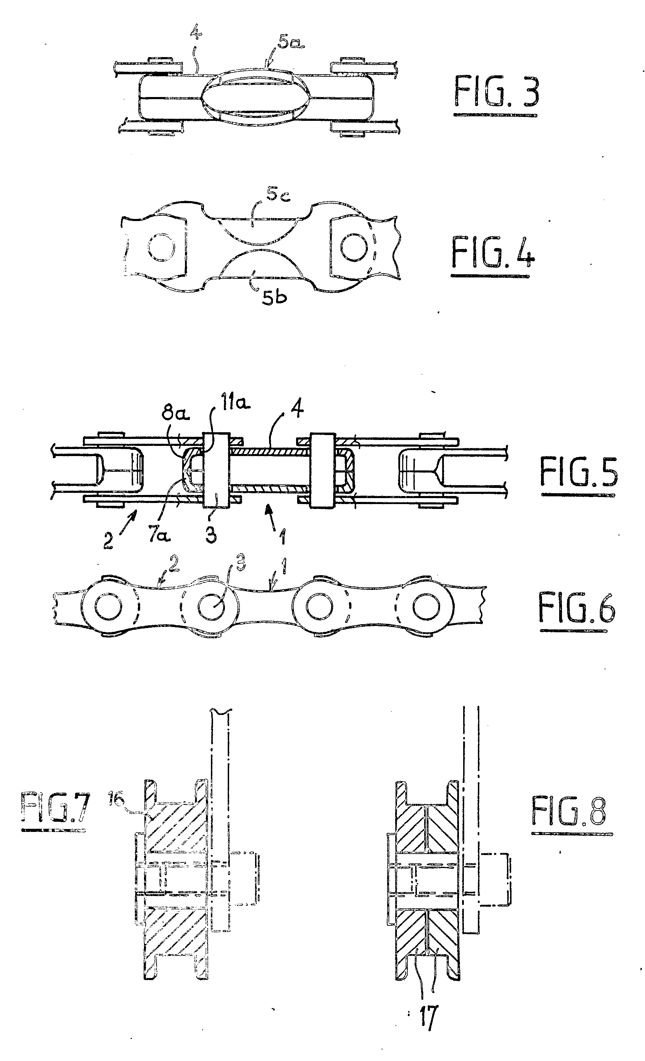

La variante représentée aux figures 3 et 4 ne diffère de celle des figures 1 et 2 qu'en ce qui concerne la forme donnée aux parties centrales 5a des plaques intérieures, ces parties centrales n'étant pas planes mais au contraire déformées vers l'extérieur, le long de leurs deux bords, en 5b et 5c. De telles déformations facilitent en particulier le passage de la chaîne sur un pignon, lorsque cette chaîne est utilisée sur un cycle muni d'un dérailleur.

La variante représentée aux Figures 5 et 6 est également du même type général que la chaîne représentée aux Figures 1 et 2. Elle ne s'en distingue que par la forme générale des maillons et surtout par le fait que l'axe de chaque surface d'engrènement 8a est confondu avec l'axe d'articulation adjacent. Il en résulte que les logement 11a qui reçoivent les axes 3 ne sont plus tangents à la génératrice interne du rebord 7a, de sorte que la surface de contact entre chaque plaque intérieure et les axes 3 est limitée à l'épaisseur du matériau constituant cette plaque.

On peut donc considérer que dans une certaine mesure, dans le mode réalisation des Figures 1 et 2, l'appui entre le maillon intérieur et l'axe est meilleur que dans le cas du mode de réalisation des Figures 5 et 6.

Il est à noter que lorsque des chaînes telles que celles que l'on vient de décrire, sont utilisées sur un cycle avec un dérailleur, on peut être amené à utiliser comme galet tendeur ou galet guide chaîne, un galet à gorge tel que représenté aux Figures 7 et 8. Dans le cas de la Figure 7, le galet 16 est réalisé monobloc tandis que dans le cas de la Figure 8, il est réalisé en deux parties identiques 17.

Les variantes qui vont être décrites mainte nant diffèrent essentiellement par la réalisation des maillons intérieurs. Les maillons extérieurs et les axes seront donc toujours désignés par les mêmes références 2 et 3, les maillons intérieurs étant décrits plus en détail.

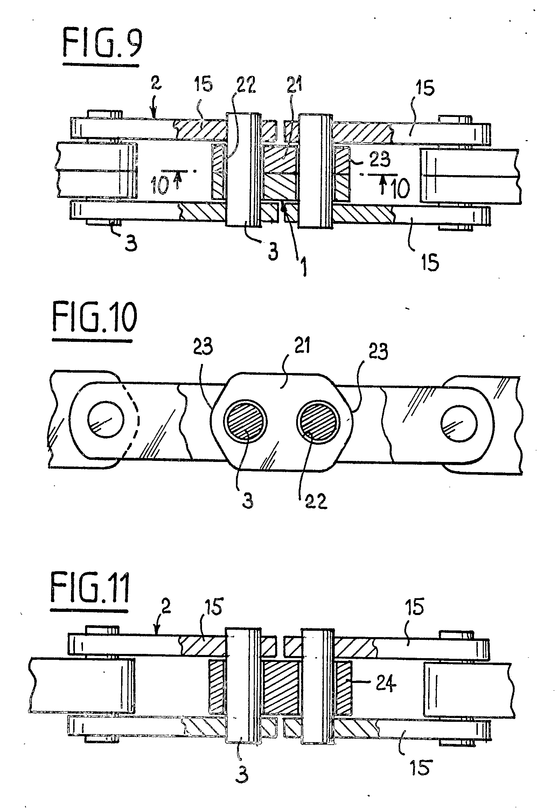

Sur les Figures 9 et 10, les maillons intérieurs sont formés de deux plaques planes identiques 21 qui sont accolées et emprisonnées entre deux paires de plaques extérieures 15. Les plaques 21 sont percées de 2 orifices 22 recevant avec jeu les axes 3.

La largeur du maillon intérieur, constitué par les deux plaques 21, est légèrement inférieure à la distance séparant les deux plaques extérieurs d'un maillon extérieur 2.

Les plaques intérieures 21 délimitent des surfaces d'engrènement 23 de forme cylindrique, sensiblement centrées sur les axes d'articulation 3.

On voit sur la figure 10, que les plaques intérieures ont une forme hexagonale mais elles peuvent bien entendu avoir une forme extérieure différente, notamment circulaire ou ovale.

Dans le mode de réalisation de la Figure 11, la chaîne a une structure très voisine de celle des Figures 9 et 10, à l'exception du fait que le maillon intérieur 1 est réalisé monobloc (24) au lieu d'être constitué par deux plaques juxtaposées.

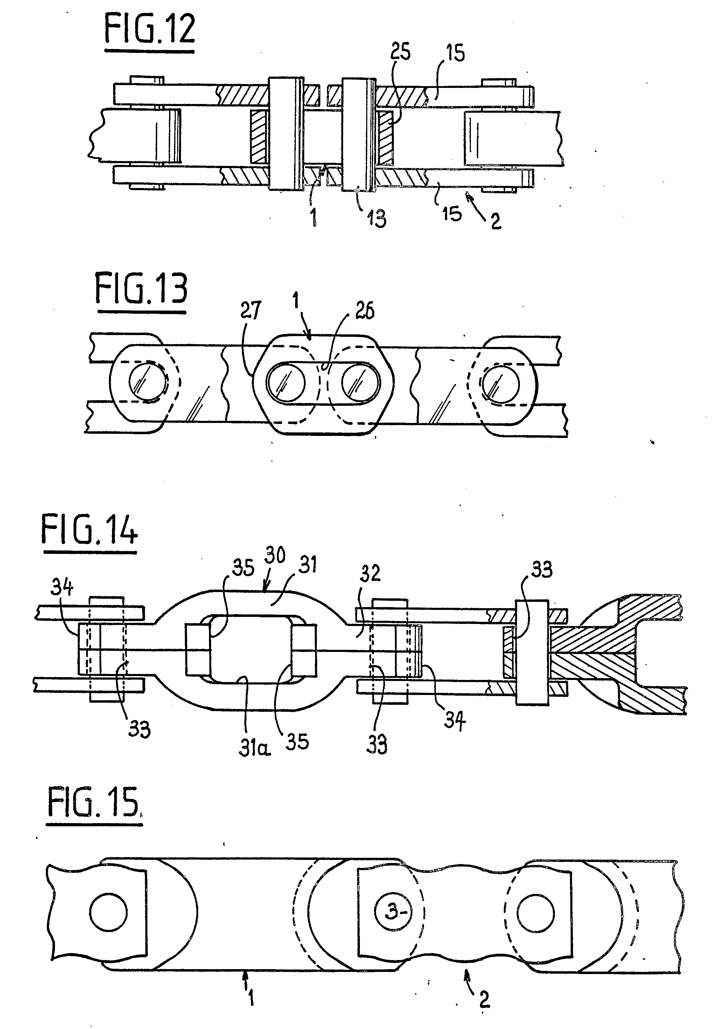

Sur la Figure 12 est représentée une chaîne dont les maillons intérieurs 1 sont constitués par une pièce 25 dont la largeur est légèrement inférieure à la distance séparant les plaques 15 d'un maillon extérieur, cette pièce délimitant d'un part une lumière oblongue 26 traversée par les deux axes 3 sur lesquels le maillon est articulé, et d'autre part des surfaces cylindriques d'engrènement 27.

Comme dans l'exemple précédent, le maillon intérieur pourrait être réalisé en deux parties identiques.

Dans le mode de réalisation des Figures 14 et 15, chaque maillon intérieur 1 est formé de deux plaques intérieures 30, identiques, comportant chacune une partie centrale 31 et deux parties d'extrémité 32.

Les parties d'extrémité 32 de deux plaques constituant un même maillon intérieur sont accolées, tandis que les parties centrales 31 sont déportées vers l'extérieur et séparées l'une de l'autre par un intervalle 31a autorisant le passage d'une dent. Dans les parties d'extrémités 32, sont percés des orifices 33 autorisant le passage avec jeu, des axes 3.

Chaque plaque intérieure délimite par ailleurs des surfaces de portée ou d'engrènement dont certaines, 34, sont disposées aux extrémités des plaques et dirigées vers l'extérieur du maillon, tandis que les autres, 35, sont dirigées vers l'intérieur de l'intervalle 31a délimité entre les parties centrales 31 des plaques.

Dans ce mode de réalisation, des surfaces d'engrènement sont donc ménagées aux extrémités et à l'intérieur de chaque maillon intérieur.

Bien entendu, les parties centrales 30 des plaques intérieures peuvent être déformées le long de leurs bords comme dans le cas des Figures 3 et 4.

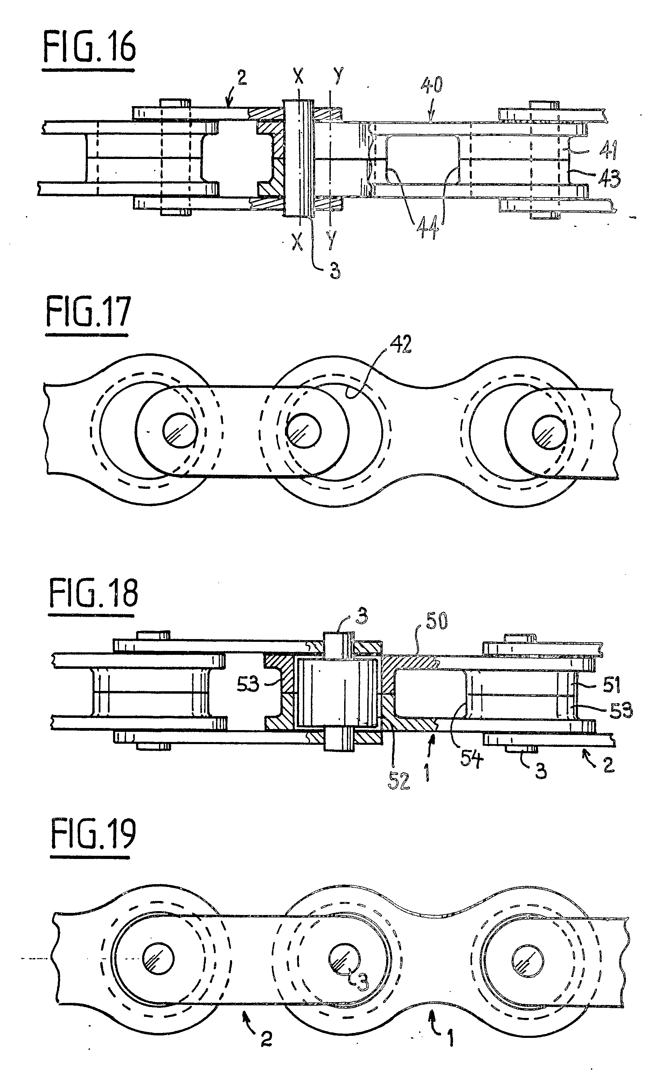

Dans l'exemple des Figures 16 et 17, chaque maillon intérieur est formé de deux plaques intérieures 40 embouties et découpées pour former des collerettes annulaires ou "canons" 41. Ces collerettes 41 délimitent d'une part des passages 42 dans lesquels s'étendent les axes 3, et d'autre part des surfaces de s'étendent les axes 3, et d'autre part des surfaces de portée ou d'engrènement 43, 44 avec lesquelles coo pèrent les dents des pignons complémentaires de la chaîne.

Dans ce mode de réalisation, les axes Y-Y des collerettes 41 sont décalés par rapport aux axes X-X adjacents.

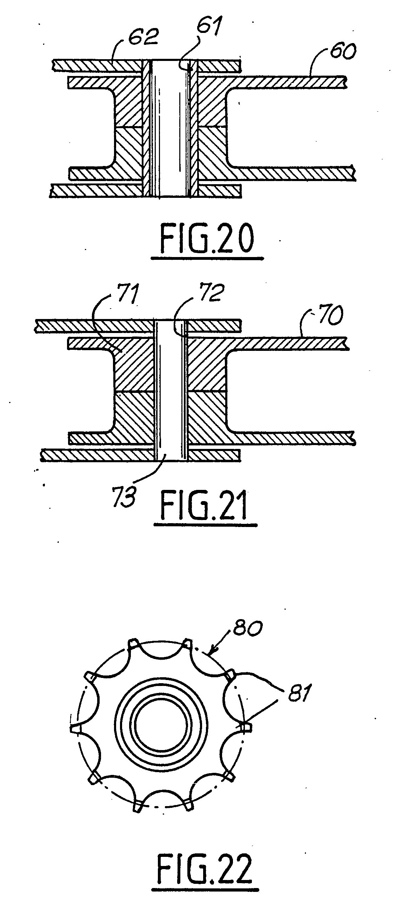

Par contre dans l'exemple des Figures 18, 19, les plaques intérieures 50 comportent des collerettes 51 qui sont centrées sur les axes 3. Ces derniers comportent une partie centrale 52 de plus grand diamètre ajustée avec un léger jeu dans les collerettes 51. Ces dernières délimitent comme dans l'exemple précédent des surfaces de portée 53 et 54.

Selon la variante de la Figure 20 les plaques intérieures 60 sont analogues aux plaques 50 et les axes d'articulation 61 sont creux et de plus grand diamètre que les axes pleins 3. Les plaques extérieures 62 sont alors dimensionnées en conséquence.

Sur la Figure 21 est représenté un maillon intérieur formé de plaques intérieures 70 réalisées par exemple par moulage et qui délimitent des parties d'extrémité ou canons 71, pleins, dans lesquels sont ménagés des logements cylindriques 72 de diamètre légèrement supérieur à celui d'axes pleins 73.

Enfin la Figure 22 représente un galet 80 comportant à sa périphérie une denture 81 dont la forme est adaptée à celle des chaînes selon l'invention.

Par rapport à un galet traditionnel, les dents de ce galet 80 ont une dimension circonférentielle plus faible et au contraire, les intervalles entre les dents sont plus larges et plus profonds.

Une chaîne suivant l'invention offre par rapport aux chaînes existantes les avantages suivants:
- elle est réalisée dans tous ses modes de réalisation à partir de trois éléments, à savoir : une plaque extérieure, un axe d'articulation, et soit une plaque intérieure soit un maillon intérieur monobloc. Ces trois éléments doivent être comparés aux cinq qui sont habituellement nécessaires pour remplir les mêmes fonctions, à savoir : une plaque extérieure, un axe, une plaque intérieure, une douille, un rouleau;
- Ce résultat est atteint en faisant remplir au maillon intérieur d'une part une fonction d'articulation sur les axes le reliant aux maillons extérieurs adjacents, et d'autre part une fonction de rouleau venant en contact avec les dents des pignons complémentaires, le maillon intérieur est de plus centré en largeur par rapport aux maillons extérieurs adjacents sans qu'il soit nécessaire de prévoir les douilles ou les rouleaux qui déterminent habituellement la largeur du maillon intérieur.
- Les diverses configurations de chaîne en-visagées permettent de réaliser, pour les maillons intérieurs et les maillons extérieurs, soit des pas égaux, soit des pas complémentaires;
- Ces chaînes peuvent avoir une largeur faible, toutes choses égales par ailleurs;
- La réduction du nombre de pièces et la forme en général simple de celles-ci permettent d'atteindre des coûts de fabrication relativement faibles.

Par ailleurs, les différents modes de réalisation envisagés peuvent présenter des avantages spécifiques qui ressortent de la description qui en a été faite. C'est ainsi notamment que dans le cas des Figures 12, 13 ou 16, 17 le maillon intérieur possède une faculté de désalignement latéral importante, ce qui peut être intéressant dans une utilisation avec un dérailleur.

## Revendications

1. Chaîne de transmission de puissance notamment pour cycle, comprenant des maillons intérieurs (1) et des maillons extérieurs (2) alternés, articulés entre eux par des axes (3), les maillons extérieurs étant formés de plaques extérieures (15) fixées aux extrémités desdits axes (3) qui s'étendent à travers les maillons intérieurs, chaque maillon intérieur (1) étant formé d'au moins un élément qui délimite, d'une part, au moins un logement interne (11; 11a; 22; 26; 33; 42; 51) en contact direct avec au moins un axe (3) mais délimitant un jeu avec cet axe de façon à réaliser l'articulation du maillon intérieur sur ledit axe et, d'autre part, au moins une surface d'engrènement (8; 23; 27; 34; 35; 43; 44; 53; 54), destinée à coopérer directement avec les dents d'une denture complémentaire, les maillons intérieurs et extérieurs autorisant le passage des dents entre les plaques qui les constituent, caractérisée en ce que chaque élément est formé d'une plaque (30) comportant une partie centrale (31) déportée vers l'extérieur par rapport à deux parties d'extrémité (32), dans lesquelles sont ménagés des orifices (33) pour le passage des axes (3), les deux éléments (30) d'un même maillon étant en appui par leurs parties d'extrémité (32) et délimitant un logement (31a) entre leurs parties centrales, des surfaces d'engrènement étant délimitées aux deux extrémités (34) des plaques et à l'intérieur du logement (31a).

2. Chaîne suivant la revendication 1, caractérisée en ce que chaque élément est formé d'une plaque (40; 50; 60; 70) comportant deux collerettes (41; 51; 71) délimitant, d'une part, lesdits logements pour le passage des axes (3; 61; 73) et, d'autre part, lesdites surfaces d'engrènement (43; 44; 53; 54).

3. Chaîne suivant la revendication 2, caractérisée en ce que les collerettes (41) délimitent des logements de diamètre sensiblement supérieur au diamètre des axes (3).

4. Chaîne suivant la revendication 2, caractérisée en ce que les axes (3) comportent des parties centrales (52) dont le diamètre est supérieur à celui de leurs extrémités et qui sont reçues avec un léger jeu dans les logements desdites collerettes (51).

5. Chaîne suivant l'une quelconque des revendications 1 à 4, caractérisée en ce que les axes (61) sont creux.

6. Chaîne suivant l'une quelconque des revendications précédentes, caractérisée en ce que les plaques intérieures comportent dans leurs parties centrales et le long de leurs bords des zones déformées vers l'extérieur.

7. Ensemble de chaîne et de galet caractérisé en ce que la chaîne est réalisée selon l'une quelconque des revendications précédentes et le galet (16; 17; 80) est conformé de façon à pouvoir coopérer avec ladite chaîne.

8. Ensemble suivant la revendication 7, caractérisé en ce que le galet (16; 17) délimite une gorge dans laquelle est reçue la chaîne.

9. Ensemble suivant la revendication 7, caractérisé en ce que le galet (80) comporte une denture dont les dents sont circonférentiellement étroites et séparées par des intervalles larges et profonds.

FIG.1

FIG.2

FIG. 3

FIG. 4

FIG. 5

FIG. 6

FIG. 7

FIG. 8

EP 0 316 238 A1

FIG.9

FIG.10

FIG.11

FIG.12

FIG.13

FIG.14

FIG.15

**FIG.16**

**FIG.17**

**FIG.18**

**FIG.19**

## FIG.20

## FIG.21

## FIG.22

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | DE-A-2 504 262  (R. STAHL AUFZÜGE)<br>--- | | F 16 G  13/06 |
| D,A | GB-A-2 000 846  (SEDIS)<br>--- | | |
| A | DE-C-  39 850  (MORGAN)<br>----- | | |

**DOMAINES TECHNIQUES RECHERCHES (Int. Cl.4)**

F 16 G
F 16 H

Le présent rapport a été établi pour toutes les revendications

| Lieu de la recherche | Date d'achèvement de la recherche | Examinateur |
|---|---|---|
| LA HAYE | 30-01-1989 | BARON C. |

EPO FORM 1503 03.82 (P0402)